**Europäisches Patentamt**

**European Patent Office**

**Office européen des brevets**

(19)

(11) Veröffentlichungsnummer : **0 094 978 B2**

(12) **NEUE EUROPÄISCHE PATENTSCHRIFT**

(45) Veröffentlichungstag der neuen Patentschrift :
**02.11.95 Patentblatt 95/44**

(51) Int. Cl.$^6$ : **H02K 21/22,** H02K 29/00,
**H02K 1/14**

(21) Anmeldenummer : **82104526.7**

(22) Anmeldetag : **24.05.82**

(54) **Rotatorische, elektrische Maschine.**

(43) Veröffentlichungstag der Anmeldung :
**30.11.83 Patentblatt 83/48**

(45) Bekanntmachung des Hinweises auf die
Patenterteilung :
**02.09.87 Patentblatt 87/36**

(45) Bekanntmachung des Hinweises auf die
Entscheidung über den Einspruch :
**02.11.95 Patentblatt 95/44**

(84) Benannte Vertragsstaaten :
**AT BE CH DE FR GB IT LI**

(56) Entgegenhaltungen :
EP-A- 0 018 904
CH-A- 526 221
DE-A- 1 936 193
DE-A- 2 132 477
DE-A- 2 245 557
DE-A- 2 930 649
DE-A- 3 132 483
DE-B- 1 033 769
DE-C- 2 835 210
DE-C- 3 022 836
FR-A- 2 012 981
FR-A- 2 099 961

(56) Entgegenhaltungen :
FR-A- 2 267 650
FR-A- 2 268 377
US-A- 1 422 414
US-A- 1 958 753
US-A- 4 223 255
H. Moczala: "Elektrische Kleinstmotoren und
ihr Einsatz", 1979, expert-Verlag;
"etz-Archiv" 4, (1982, S. 219-224);
"etz", Band 100 (1979, S. 1382-1386);
Datenblatt IEP T8 PF "Plastiform" der Fa. 3M
Deutschland GmbH, April 1976;
Archiv für Elektrotechnik, Bd. 57, H.2, 1975, S.
71-84;
Valvo, April 1978, S. 73-76

(73) Patentinhaber : **Magnet-Motor Gesellschaft für
magnetmotorische Technik mbH
Petersbrunnerstrasse 2
D-82319 Starnberg (DE)**

(72) Erfinder : **Heidelberg, Götz, Dipl.-Phys.
Am Hügel 16
D-8136 Percha (DE)**

(74) Vertreter : **Klunker, Hans-Friedrich, Dr. et al
Patentanwälte
Klunker . Schmitt-Nilson . Hirsch
Winzererstrasse 106
D-80797 München (DE)**

EP 0 094 978 B2

## Beschreibung

Gegenstand der Erfindung ist eine rotatorische, elektrische Maschine mit einem ersten Funktionsteil und einem zweiten Funktionsteil, wobei eines der beiden Funktionsteile relativ zu dem anderen Funktionsteil rotierbar ist und wobei zwischen den beiden einander zugewandten Oberflächen der beiden Funktionsteile ein Luftspalt besteht, mit folgenden Merkmalen in Kombination:

(a) eines der beiden Funktionsteile weist auf seiner dem Luftspalt zugewandten Seite ringförmig verteilt eine Vielzahl von Dauermagnetpolen in abwechselnder Polung auf;

(b) die Dauermagnetpole sind von Dauermagneten mit einer Permeabilitätszahl, die in der Größenordnung der Permeabilität von Luft ($\mu_r$ = 1) liegt, gebildet;

(c) das andere der beiden Funktionsteile weist auf seiner dem Luftspalt zugewandten Seite ringförmig verteilt eine Vielzahl von Elektromagnetpolen mit schaltbaren Elektromagnetpolwicklungen auf;

(d) die Anzahl der Dauermagnetpole ist gleich der Anzahl der Elektromagnetpole oder unterscheidet sich um eine kleine ganze Zahl von der Anzahl der Elektromagnetpole;

(e) die Elektromagnetpole sind mit einzeln zugeordneten Elektromagnetpolwicklungen versehen;

(f) zur Schaltung der Elektromagnetpolwicklungen jeweils in passende Stromrichtung für die Zeitdauer einer funktionsgeeigneten Relativstellung zu Dauermagnetpolen sind mehrere elektronische Schalteinrichtungen vorgesehen, die jeweils eine Teilanzahl von Elektromagnetpolwicklungen schalten und durch Erfassung der Rotations-Relativstellung der beiden Funktionsteile von mindestens einem, an dem mit den Elektromagnetpolen versehenen Funktionsteil angeordneten Sensor gesteuert sind;

(g) jeweils eine elektronische Schalteinrichtung ist vorgesehen

(g1) zum Schalten der Elektromagnetpolwicklung eines einzigen Elektromagnetpols, oder
(g2) zum gemeinsamen Schalten der Elektromagnetpolwicklungen mehrerer, aber nicht aller derjenigen Elektromagnetpole, die sich - im Fall eines Unterschieds zwischen der Anzahl der Dauermagnetpole und der Anzahl der Elektromagnetpole der Maschine - in gleicher Relativstellung zu Dauermagnetpolen befinden;

(h) die elektronischen Schalteinrichtungen sind mit vier in Brückenschaltung angeordneten, steuerbaren Halbleiterschaltelementen aufgebaut.

Insbesondere handelt es sich um einen Elektromotor oder einen elektrischen Generator. Die erfindungsgemäße Maschine kann funktionell am ehesten der Klasse der Gleichstrom-Elektromotoren zugeordnet werden.

Ein Elektromotor mit den vorstehenden Merkmalen (a), (c), (d) 2. Alternative, (f) und (h) ist aus dem Dokument DE-A1-31 32 483 bekannt. Dieser Elektromotor besitzt 10 Dauermagnetpole und 4 Elektromagnetpole, wobei die Wicklungen von jeweils 2 Elektromagnetpolen, die gleiche Relativstellung zu Dauermagnetpolen haben, in Reihe geschaltet sind und von einer Schalteinrichtung mit vier in Brückenschaltung angeordneten, steuerbaren Halbleiterschaltelementen zeitrichtig in ihrer Stromrichtung umgeschaltet werden.

Rotatorische Elektromotoren mit Dauermagnetpolen an einem Außenläufer und sensorgesteuert elektronisch schaltbaren Elektromagnetpolwicklungen am Stator sind bekannt (FR-A-2 099 961, DE-A 2 245 557), auch mit den Elektromagnetpolen einzeln zugeordneten Elektromagnetpolwicklungen (FR-A-2 099 961). Dauermagnete aus Samarium-Kobalt, die die Bedingung $\mu_r$ in der Gegend von 1 erfüllen, sind bei Elektromotoren ebenfalls an sich bekannt (FR-A-2 267 650).

Die erfindungsgemäße elektrische Maschine unterscheidet sich auch von der Gesamtheit der aus den genannten Druckschriften bekannten Merkmale durch die oben unter (g) angegebene, besondere Ausbildung der elektronischen Steuerung, bei der jeweils für eine einzelne Elektromagnetpolwicklung oder für eine spezielle Teilanzahl der Elektromagnetpolwicklungen eine elektronische Schalteinrichtung mit einem Vierquadrantensteller vorgesehen ist.

Durch die Merkmalskombination der Erfindung wird eine Reihe von für den praktischen Einsatz sehr wertvollen Vorteilen erreicht:

1. Bei Elektromotoren entsteht eine schwächende Rückwirkung der Elektromagnetfelder auf den Erregerteil des Motors gegen die Rotation des Motors. Die Größe dieser Rückwirkung hängt vom magnetischen Widerstand in den einzelnen magnetischen Kreisen zwischen Läufer und Stator ab, wobei dieser magnetische Widerstand wegen der aus anderen Gründen anzustrebenden, geringen Dicke des Luftspalts von üblicherweise ca. 1 mm bisher gering war. Bei der erfindungsgemäßen Maschine haben jedoch die einzelnen magnetischen Kreise auch bei geringer Dicke des Luftspalts einen hohen magnetischen Widerstand aufgrund der im Vergleich zu Eisen um einige Größenordnungen niedrigeren Permeabilitätszahl der Dauermagnete. Infolgedessen verringert sich die geschilderte, schwächende Rückwirkung ganz entscheidend. Außerdem sinkt die Induktivität der umzusteuernden Elektromagnete wesentlich, so daß man mit hohen Geschwindigkeiten der Umsteuerung bzw. der Schaltung der Elektromagnetpole arbeiten kann. Daraus resultiert die günstige Möglichkeit, die erfindungsgemäße Maschine mit vielen Polen auszustatten und/oder mit hoher Umfangsgeschwindigkeit an der Wirkfläche bzw. an der Luftspaltfläche der Maschine zu arbeiten.

2. Da jede der elektronischen Schalteinrichtungen nur einen einzigen oder nur eine spezielle Teilanzahl von Elektromagnetpolen gemeinsam schaltet, müssen von jeder elektronischen Schalteinrichtung nur kleinere Leistungen geschaltet werden. Infolgedessen kommt man mit überproportional billigeren Schalteinrichtungen aus, kann den Kühlaufwand für die Schalteinrichtungen verringern und steigert die Zuverlässigkeit der Maschine erheblich, da der Ausfall einzelner Schalteinrichtungen die Gesamtfunktion nicht einschneidend stört. Auch die Wartung der Maschine gestaltet sich einfacher, da vergleichsweise billige Schalteinrichtungen einzeln ausgewechselt werden können.

Bevorzugte Ausgestaltungen der Erfindung gehen aus den Ansprüchen 2 bis 15 hervor. Zum Gegenstand des Anspruchs 1 und zu einigen dieser Ausgestaltungen werden nachfolgend noch erläuternde Ausführungen gemacht.

Prinzipiell ist es gleichgültig, ob das mit den Dauermagnetpolen versehene Funktionsteil stationär ist und das mit den Elektromagnetpolen versehene Funktionsteil rotiert oder umgekehrt. Es ist weiterhin prinzipiell gleichgültig, ob sich die beiden Funktionsteile in Axialrichtung gegenüberliegen oder in Radialrichtung, so daß das eine Funktionsteil innerhalb des anderen Funktionsteils angeordnet ist. Im letztgenannten Fall der radialen Ineinanderanordnung der beiden Funktionsteile ist es ferner prinzipiell gleichgültig, ob die Dauermagnetpole am radial inneren Funktionsteil und die Elektromagnetpole am radial äußeren Funktionsteil angeordnet sind oder umgekehrt. Besonders bevorzugt ist jedoch eine Ausbildung, bei der der rotierende Teil der Maschine radial außerhalb um den stationären Teil der Maschine angeordnet ist und bei der die Dauermagnetpole am Innenumfang dieses rotierenden Maschinenteils angeordnet sind. Die besonderen Vorteile dieser Auslegung werden weiter unten noch genauer erläutert werden.

Die erfindungsgemäße Maschine kann so gebaut werden, daß die Anzahl der Dauermagnetpole exakt der Anzahl der Elektromagnetpole entspricht. Bevorzugt ist jedoch ein geringer Unterschied zwischen der Anzahl der Dauermagnetpole und der Anzahl der Elektromagnetpole, insbesondere ein Unterschied von weniger als 10 % der Anzahl der Dauermagnetpole. Besonders günstig ist es, einige, beispielsweise 1, 2, 3 oder 4, Elektromagnetpole weniger als Dauermagnetpole vorzusehen. Dies führt zu einem sicheren Motoranlauf, einem gleichmäßigen Motorlauf und zu einer gleichmäßigen Netzbelastung.

Besonders bevorzugt sind Dauermagnete aus einem Werksoff auf der Basis seltener Erden mit Kobalt, insbesondere Samarium-Kobalt-Dauermagnete.

Bei der erfindungsgemäßen elektrischen Maschine sind mehrere elektronische Schalteinrichtungen vorgesehen, die jeweils mit mindestens einem Sensor gekoppelt sind, und durch jede der elektronischen Schalteinrichtungen wird nur eine kleinere Anzahl von Elektromagnetpolen, die sich in mindestens im wesentlichen gleicher Relativstellung zu Dauermagnetpolen befinden, gemeinsam geschaltet. Auch die Verwirklichung des unteren Grenzfalls der Auslegung, daß pro Elektromagnetpol eine elektronische Schalteinrichtung vorgesehen ist, ist möglich.

Als Sensoren sind Hallgeneratoren besonders bevorzugt, da diese robust sind und konstruktiv bequem auf die Magnetfelder der Dauermagnete ansprechend angeordnet werden können. Es sind aber auch andere Sensoren einsetzbar, beispielsweise Readkontakte, Photozellen, Induktionssensoren oder Permeabilitätssensoren.

Es können vor dem Einbau gewickelte und auswechselbar am betreffenden Funktionsteil befestigte Elektromagnetpol-Bauelemente vorgesehend sein. Diese Bauelemente können untereinander gleich sein, was die Herstellung verbilligt und die Austauschbarkeit erleichtert.

Die Elektromagnete sind vorzugsweise mit ihren Füßen aneinanderstoßend vorgesehen. In diesem Fall kann man auf einen magnetischen Rücken aus lamelliertem Eisen zur Schaffung eines magnetischen Flußweges hinter benachbarten Elektromagneten verzichten, weil die aneinanderstoßenden Elektromagnetfüße den erforderlichen Magnetschluß schaffen.

Die Dauermagnete sind vorzugsweise in Umfangsrichtung unmittelbar oder über dünne Kunststoffzwischenlagen aneinanderstoßend vorgesehen, wodurch man optimal viel Dauermagnetvolumen räumlich unterbringt. Hinter den Dauermagneten ist üblicherweise ein magnetisch leitender Rücken angeordnet.

Vorzugsweise entspricht die Teilung der Anordnung der Dauermagnetpole und/oder die Länge der Dauermagnetpole in Rotations-Umfangsrichtung im wesentlichen der Länge der Elektromagnetpole in Rotations-Umfangsrichtung. Auf diese Weise kommt man zu einer optimalen Volumenausnutzung und verringert die Umlaufwinkelbereiche, die nicht zur Flußänderung beitragen.

Besonders bevorzugt ist die Verwendung der erfindungsgemäßen Maschine als Radantriebsmotor bei Kraftfahrzeugen.

Im folgenden wird ein schematisch dargestellter Elektromotor näher beschrieben. Dieser Elektromotor verwirklicht nicht das Merkmal (g) des Anspruchs 1 und ist insoweit also nicht patentgemäß ausgebildet; seine Beschreibung erleichtert dennoch das Verständnis der Erfindung. Es zeigen:

Fig. 1 einen Querschnitt eines Elektromotors senkrecht zu seiner Rotationsachse;

Fig. 2 eine Einzelheit hinsichtlich des Aufbaus und der Anbringung zweier benachbarter Elektromagnete;

Fig. 3 den prinzipiellen Aufbau einer elektronischen Schalteinrichtung zur Schaltung der Elektromagnetpole.

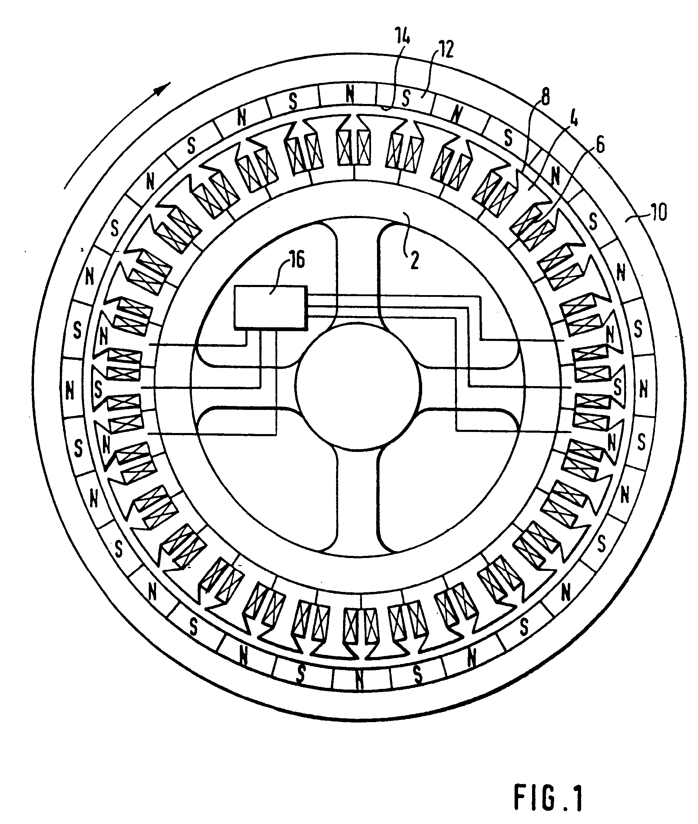

Beim in Fig. 1 dargestellten Ausführungsbeispiel sind am Außenumfang eines stationären Funktionsteils 2 in Umfangsrichtung ringförmig verteilt 30 Elektromagnete 4 in gleichmäßiger Teilung angeordnet .Die Elektromagnete 4 haben jeweils einen im dargestellten Schnitt im wesentlichen doppel-T-förmigen Kern 18 und weisen im mittleren Bereich eine schematisch angedeutete Wicklung 6 auf, deren Drähte senkrecht zur Zeichnungsebene verlaufen. Am Außenumfang bietet jeder Elektromagnet 4 einen Elektromagnetpol 8 dar, der je nach Stromrichtung durch die Wicklung 6 ein Nordpol oder ein Südpol ist.

Um das stationäre Funktionsteil 2 herum ist ein rotierbares Funktionsteil 10 angeordnet, das insgesamt im wesentlichen die Gestalt eines einseitig topförmig geschlossenen Hohlzylinders hat, der an der geschlossenen Seite axial neben dem stationären Funktionsteil 2 an einer nicht dargestellten Welle befestigt ist. Am Innenumfang des rotierbaren Funktionsteils 10 sind ringförmig verteilt mit gleichmäßiger Teilung Dauermagnete 12 angebracht, und zwar im dargestellten Ausführungabeispiel 32 Dauermagnete. Die Dauermagnete 12 bieten an ihrem Innenumfang Dauermagnetpole 14 dar, und zwar in Umfangsrichtung abwechselnd Nordpole und Südpole. Die Dauermagnete 12 bzw. die Dauermagnetpole 14 sind in Umfangsrichtung jeweils im wesentlichen so lang wie die Elektromagnetpole 8. Die einzelnen Dauermagnete 12 stoßen in Umfangsrichtung unmittelbar aneinander und können z. B. angeklebt sein.

Zur Erleichterung des Verständnisses wird zunächst einmal der Fall betrachtet, daß die Anzahl der Elektromagnetpole 8 und die Anzahl der Dauermagnetpole 14 gleich ist. Dann müßten laufend bei jeder Relativstellung der beiden Funktionsteile 2, 10, bei der jeder Dauermagnetpol 14 gerade einem Elektromagnetpol 8 genau gegenübersteht, sämtliche Elektromagnete 4 gleichzeitig umgeschaltet werden.

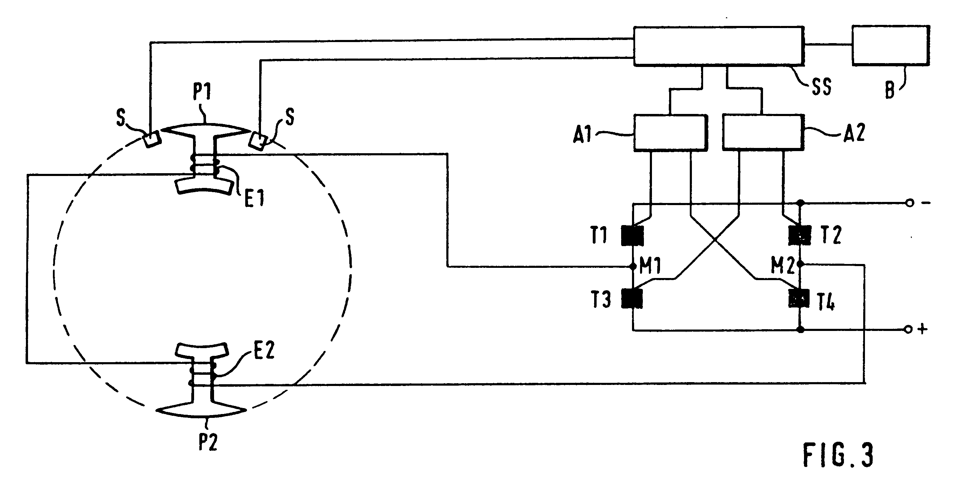

Beim dargestellten Ausführungsbeispiel sind 2 Dauermagnetpole 14 mehr als Elektromagnetpole 8 vorgesehen. Es werden nicht gleichzeitig sämtliche Elektromagnete 4 umgeschaltet, sondern mit Hilfe von 5 elektronischen Schalteinrichtungen (vgl. nachfolgende Beschreibung der Fig. 3) jeweils gleichzeitig 6 Elektromagnete 4, nämlich zwei sich diametral gegenüberliegende Dreiergruppen von Elektromagneten 4. Die beiden Dreiergruppen befinden sich in exakt gleicher Relativstellung zu Dauermagnetpolen 14, während innerhalb jeder Dreiergruppe die Relativstellung zu Dauermagnetpolen 14 von Elektromagnetpol 8 zu Elektromagnetpol 8 geringfügig variiert. Eine elektronische Schalteinrichtung 16 für die geschilderten 6 Elektromagnete 4 ist schematisch eingezeichnet. 4 weitere derartige elektronische Schalteinrichtungen 16 sind analog zur Schaltung der restlichen Elektromagnete 4 vorgesehen.

An der in Umfangsrichtung vorderen Kante und an der in Umfangsrichtung hinteren Kante des mittleren Elektromagnetpols 8 jeder Dreiergruppe ist eine Hallsonde als Sensor S angebracht, der den Wechsel von jeweils vorbeirotierendem Dauermagnet-Nordpol zu Dauermagnet-Südpol und umgekehrt erfaßt. Diese Information über die Relativstellung von stationärem Funktionsteil 2 und rotierbarem Funktionsteil 10 Wird an die jeweilige Schalteinrichtung 16 weitergegeben.

Es gilt folgende Formel:

$$n_s \cdot n_v = \frac{n_E}{n_M - n_E}$$

$n_s = 5$ Anzahl der elektronischen Schalteinrichtungen 16

$n_v = 3$ Anzahl der benachbarten, gleichzeitig geschalteten Elektromagnetpole

$n_E = 30$ Anzahl der Elektromagnetpole

$n_M = 32$ Anzahl der Dauermagnetpole.

Zu jedem betrachteten Zeitpunkt sind alle Elektromagnetpole 8 eingeschaltet, und zwar jeweils mit Passender Stromrichtung in Relation zum jeweils zusammenwirkenden Dauermagnetpol 14. Die Schalteinrichtungen 16 bewirken ein zeitrichtiges Umschalten der einzelnen Elektromagnetpole 8 in die andere Stromrichtung.

Es wird darauf hingewiesen, daß auch Auslegungen der erfindungsgemäßen Maschine möglich sind, bei denen aufgrund der Anzahl von Dauermagnetpolen und Elektromagnetpolen sowie aufgrund der Abmessungen der Dauermagnetpole und der Elektromagnetpole das Schalten der Elektromagnetpole nicht ein Umschalten praktisch ohne Pause in der Strombeaufschlagung ist, sondern mehr ein Einschalten für eine bestimmte Zeitdauer, Ausschalten für eine bestimmte Zeitdauer, erneutes Einschalten mit umgekehrter Stromrichtung u.s.w.

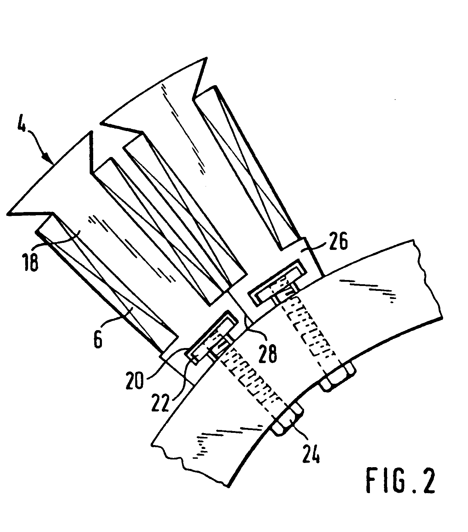

In Fig. 2 ist im größeren Maßstab wiedergegeben, wie die einzelnen Elektromagnete 4 am stationären Funktionsteil 2 angeordnet und befestigt sind. Jeder Elektromagnet 4 besitzt einen in der gezeichneten Schnittdarstellung doppel-T-förmigen Kern 18. Der Kern 18 kann als senkrecht zur Zeichenebene geschichtetes Paket aus Eisenlamellen ausgebildet sein. Eine andere Möglichkeit besteht darin, den Kern 18 aus möglichst dicht in Kunststoff eingebetteten Eisenpulverteilchen aufzubauen, wobei der Kern 18 durch Spritzgießen besonders einfach herstellbar ist.

Radial innen weist jeder Kern 18 eine axial verlaufende, hinterschnittene Nut 20 auf. Mit Hilfe einer in dieser Nut 20 eingesetzten, mit Gewindebohrungen versehenen Leiste 22 ist jeder Kern 18 mittels Schrauben 24 mit dem stationären Funktionsteil 2 von innen verschraubt. Die geschilderte Technik der Herstellung der Kerne 18 und die geschilderte einfache Befestigung der Kerne 18 am stationären Funktionsteil 2 ist insbesondere auch deshalb möglich, weil sich das stationäre Funktionsteil 2 nicht dreht, so daß die Elektromagnete 4 keiner Zentrifugalkraft unterliegen.

Benachbarte Elektromagnete 4 sind mit ihren Füßen 26, das ist der radial innere Schenkel des doppel-T-förmigen Querschnitts, in Umfangsrichtung flächig aneinanderstoßend vorgesehen. Die Fuß-Kontaktflächen 28 gewährleisten einen magnetischen Flußweg zwischen benachbarten Elektromagneten 4, so daß radial innerhalb der Elektromagnete 4 am stationären Funktionsteil 2 kein magnetisch leitender Rücken vorgesehen werden muß.

Man kann die Elektromagnetkerne 18 auch ohne radial inneren Schenkel fertigen und an das stationäre Funktionsteil 2 schrauben. In diesem Fall muß allerdings ein lamellierter oder mit in Kunststoff eingebatteten Eisenpulverteilchen aufgebauter Rücken radial innerhalb der einzelnen Elektromagnete 4 vorgesehen werden.

Fig. 3 zeigt eine elektronische Schalteinrichtung detaillierter. Von der elektrischen Maschine ist nur das stationäre Funktionsteil 2 mit zwei diametral gegenüberliegenden Elektromagneten 4, nämlich jeweils dem mittleren Elektromagnet 4 aus der jeweiligen geschilderten Dreiergruppe dargestellt. Die hier mit E1 und E2 bezeichneten Wicklungen sind in Reihe geschaltet; sie könnten jedoch auch parallel geschaltet sein.

Die Reihenschaltung mit den Wicklungen E1 und E2 ist an die beiden Mittenpunkte M1 und M2 einer Schaltbrücke angeschlossen, die bei der dargestellten Ausführungsform mit 4 steuerbaren Halbleiterschaltelementen T1, T2, T3 und T4 aufgebaut ist. Die Schaltbrücke ist einen Endes an den negativen Pol und anderen Endes an den Positiven Pol einer Betriebsspannungsquelle angeschlossen. Die Steuerelektroden der in der Brückenschaltung diagonal gegenüberliegenden Halbleiterschaltelemente T1 und T4 sind an den Ausgang einer ersten Ansteuerschaltung A1 angeschlossen, während die Steuerelektroden der restlichen Halbleiterschaltelemente T2 und T3 an den Ausgang einer zweiten Ansteuerschaltung A2 angeschlossen sind. Eingangsseitige Steueranschlüsse der Ansteuerschaltungen A1 und A2 sind an getrennte Ausgänge einer Steuerschaltung SS angeschlossen.

Einem der beiden funktionsmäßig zueinander gehörenden Elektromagnetpole P1 und P2 ist mindestens ein Sensor S zugeordnet, mit dem die Rotations-Relativstellung zwischen diesem Elektromagnetpol und dem Dauermagnatpolen des rotierenden Ausführungsform davon ausgegangen. daß die Dauermagnetpole auf einam Ring angeordnet sind. der sich außen um die Elektromagnetpole P1 und P2 herumdreht. Mit Hilfe des Sensors werden bei der Feststellung eines Dauermagnetpolwechsels die Wicklungen E1 und E2 umgeschaltet. Zu diesem Zweck wird die Steuerschaltung SS mit einem Ausgangssignal des Sensors S beaufschlagt und die Steuerschaltung SS bewirkt dann über die beiden Ansteuerschaltungen A1 und A2 ein Einschalten zweier sich diagonal gegenüberliegender Halbleiterschaltelemente der Schaltbrücke derart, daß Strom entweder in der einen oder in der anderen Richtung durch die in Reihe geschalteten Wicklungen E1 und E2 fließt.

Bei der dargestellten Ausführungsform sind zwei Sensoren S beidseits des Elektromagnetpols P1 vorgesehen, wobei das Umschalten der Stromrichtung in den Wicklungen E1 und E2 in der einen Drehrichtung der elektrischen Maschine von dem einen Sensor S und in der anderen Drehrichtung von dem anderen Sensor S gesteuert wird.

Die Steuerschaltung SS ist des weiteren mit einer Befehlsgeberschaltung B verbunden, mit der Steuerbefehle wie Start/Stop, Drehzahl und Drehrichtung eingegeben werden können. Bei der Steuerschaltung SS handelt es sich dabei vorzugsweise um einen Mikroprozessor. der mit einem fest vorgegebenen oder auch einem änderbaren Programm Abhängigkeit von den Befehlssignalen von der Befehlsgeberschaltung B und den Ausgangssignalen von den Sensoren S seine Schaltsignale über die Ansteuerschaltungen A1 und A2 auf die SSchaltbrücke T1 bis T4 gibt.

Nach den Prinzipien der Erfindung aufgebaute elektrische Maschinen erbringen eine ganze Reihe von für die Praxis bedeutsamen Vorteilen: Durch die elektronische Schaltung der einzelnen Elektromagnete werden verschleißanfällige und herstellungsaufwendige Schleifkontakte sowie ein Kommutator vermieden. Die elektronische Steuerung eröffnet Steuerungsmöglichkeiten wie sie bei herkömmlichen elektrischen Maschinen nur mit großem Aufwand bewerkstelligbar waren, z. B. großer nutzbarer Drehzahlbereich mit hohem Wirkungsgrad, Steuerung auf bestimmtes Drehmoment, Drehzahländerung und dergleichen. Die elektronische Steuerung ermöglicht eine Auslegung mit einer Differenz zwischen der Anzahl der Dauermagnetpole und der Anzahl der Elektromagnetpole, was einen sicheren Motoranlauf, einen gleichmäßigen Motorlauf und eine gleichmäßige Netzbelastung mit sich bringt. Die Dauermagnete sind wartungsgünstig und energiegünstig. Wenn man Dauermagnete mit einer Permeabilitätszahl in der Nähe von Luft einsetzt, kann man wegen der verringerten Rückwirkung der Elektromagnetfelder mit wesentlich höheren Stromstärken in den Elektromagneten und mit einer hohen Umsteuerungsgeschwindigkeit der Elektromagnete arbeiten. Die Bewicklung des elektromagnetischen Funktionsteils der Maschine kann nach dem Prinzip der Einphasigkeit erfolgen, d.h. daß die Wicklungen der einzelnen Elektromagnete nicht durch platzraubende, sogenannte Wickelköpfe miteinander in Verbindung stehen. Hieraus resultiert die Möglichkeit, die Elektromagnete als untereinander gleiche Bauelemente außerhalb der Maschine vorzufertigen und als Bauelemente zu montieren, mit allen Vorteilen für Austausch und Wartung. Die elektronische Steuerung kann je nach Bedarf so ausgelegt werden, daß jede elektronische Schalteinrichtung nur einen oder mehrere in mindestens im wesentlichen analoger Relativstellung zu Dauermagnetpolen befindliche Elektromagnete schaltet. Infolgedessen kann man elektronische Schalteinrichtungen mit der gerade jeweils passende Schaltleistung, insbesondere einer im Hinblick auf den Preis die Kühlung und die Wartung günstigen kleinen Schaltleistung, wählen. Die Anordnung der Elektromagnete radial außen an einem inneren, stationären Funktionsteil sowie die Anbringung der Dauermagnete radial innen an einem radial äußeren, rotierbaren, Funktionsteil vereinfacht die Magnetbefestigung insgesamt, da die Elektromagnete keiner Fliehkraft unterliegen und da die Dauermagnete durch die Fliehkraft gegen ihre Befestigungsfläche gedrückt werden. Wenn die Dauermagnete radial außerhalb des Luftspalts angeordnet sind, rückt die sogenannte Wirkfläche der Maschine radial weiter nach außen, weil die Dauermagnete radial weniger Platz beanspruchen als die Elektromagnete. Wegen der weiter nach außen gerückten Wirkfläche der Maschine steht mehr Raum für die Elektromagnete zur Verfügung. Der größere Abstand der Wirkfläche zur Rotationsachse der Maschine hat eine Vergrößerung der Wirkfläche und einen vergrößerten Hebelarm der Magnetkräfte zur Rotationsachse der Maschine zur Folge.

Der topfförmige Läufer kann in einem herkömmlichen Kraftfahrzeugrad mit außen aufgezogenem Reifen untergebracht sein. Die Elektromagnete werden in diesem Fall am Außenumfang eines stationären, zusätzlichen Bauteils derart befestigt, daß zwischen deren äußeren Polflächen und den inneren Polflächen der Dauermagnete der Luftspalt verbleibt.

**Patentansprüche**

1. Rotatorische, elektrische Maschine mit einem ersten Funktionsteil (2) und einem zweiten Funktionsteil (10), wobei eines der beiden Funktionsteile (10) relativ zu dem anderen Funktionsteil (2) rotierbar ist und wobei zwischen den beiden einander zugewandten Oberflächen der beiden Funktionsteile (2,10) ein Luftspalt besteht, mit folgenden Merkmalen in Kombination:

   (a) eines der beiden Funktionsteile (10) weist auf seiner dem Luftspalt zugewandten Seite ringförmig verteilt eine Vielzahl von Dauermagnetpolen (14) in abwechselnder Polung auf;

   (b) die Dauermagnetpole (14) sind von Dauermagneten (12) mit einer Permeabilitätszahl, die in der Größenordnung der Permeabilität von Luft ($\mu_r = 1$) liegt, gebildet;

   (c) das andere der beiden Funktionsteile (2) weist auf seiner dem Luftspalt zugewandten Seite ringförmig verteilt eine Vielzahl von Elektromagnetpolen (8) mit schaltbaren Elektromagnetpolwicklungen ($6;E_1;E_2$) auf;

   (d) die Anzahl der Dauermagnetpole (14) ist gleich der Anzahl der Elektromagnetpole (8) oder unterscheidet sich um eine kleine ganze Zahl von der Anzahl der Elektromagnetpole (8);

   (e) die Elektromagnetpole (8) sind mit einzeln zugeordneten Elektromagnetpolwicklungen ($6;E_1;E_2$) versehen;

   (f) zur Schaltung der Elektromagnetpolwicklungen ($6;E_1;E_2$) jeweils in passende Stromrichtung für die Zeitdauer einer funktionsgeeigneten Relativstellung zu Dauermagnetpolen (14) sind mehrere elektronische Schalteinrichtungen (16) vorgesehen, die jeweils eine Teilanzahl von Elektromagnetpolwicklungen ($6;E_1;E_2$) schalten und durch Erfassung der Rotations-Relativstellung der beiden Funktionsteile (2,10) von mindestens einem, an dem mit den Elektromagnetpolen (8) versehenen Funktionsteil (2) angeordneten Sensor (S) gesteuert sind;

   (g) jeweils eine elektronische Schalteinrichtung (16) ist vorgesehen

      (g1) zum Schalten der Elektromagnetpolwicklung ($6;E_1;E_2$) eines einzigen Elektromagnetpols (8), oder

      (g2) zum gemeinsamen Schalten der Elektromagnetpolwicklungen ($6;E_1;E_2$) mehrerer, aber nicht aller derjenigen Elektromagnetpole (8), die sich - im Fall eines Unterschieds zwischen der Anzahl der Dauermagnetpole (14) und der Anzahl der Elektromagnetpole (8) der Maschine - in gleicher Relativstellung zu Dauermagnetpolen (14) befinden;

   (h) die elektronischen Schalteinrichtungen (16) sind mit vier in Brückenschaltung angeordneten, steuerbaren Halbleiterschaltelementen (T1, T2,T3,T4) aufgebaut.

2. Maschine nach Anspruch 1, dadurch gekennzeichnet, daß eines der beiden Funktionsteile (2) innerhalb des anderen Funktionsteils (10) angeordnet ist, so daß ein im wesentlichen zylindrischer Luftspalt gebildet ist.

3. Maschine nach Anspruch 2, dadurch gekennzeichnet, daß die Dauermagnetpole (14) am äußeren Funktionsteil (10) vorgesehen sind.

4. Maschine nach Anspruch 2 oder 3, dadurch gekennzeichnet, daß das innere Funktionsteil (2) stationär ist und daß das äußere, rotierbare Funktionsteil (10) topfförmig ist.

5. Maschine nach einem der Ansprüche 1 bis 4, dadurch gekennzeichnet, daß Dauermagnete (12) aus einem Werkstoff auf der Basis seltener Erden mit Kobalt vorgesehen sind.

6. Maschine nach einem der Ansprüche 1 bis 5, dadurch gekennzeichnet, daß als Sensoren (S) Hallsonden vorgesehen sind.

7. Maschine nach einem der Ansprüche 1 bis 6, dadurch gekennzeichnet, daß vor dem Einbau gewickelte und auswechselbar am betreffenden Funktionsteil (2) befestigte Elektromagnetpol-Bauelemente vorgesehen sind.

8. Maschine nach Anspruch 7, dadurch gekennzeichnet, daß die Bauelemente untereinander gleich sind.

9. Maschine nach einem der Ansprüche 1 bis 8, dadurch gekennzeichnet, daß die Elektromagnete (4) in Umfangsrichtung mit ihren Füßen (26) aneinanderstoßend vorgesehen sind.

10. Maschine nach einem der Ansprüche 1 bis 9, dadurch gekennzeichnet, daß die Dauermagnete (12) in Umfangsrichtung unmittelbar oder über dünne Kunststoffzwischenlagen aneinanderstoßend vorgesehen sind.

11. Maschine nach einem der Ansprüche 1 bis 10, dadurch gekennzeichnet, daß die Teilung der Anordnung der Dauermagnetpole (14) und/oder die Länge der Dauermagnetpole (14) in Rotations-Umfangsrichtung im wesentlichen der Länge der Elektromagnetpole (8) in Rotations-Umfangsrichtung entspricht.

12. Maschine nach einem der Ansprüche 1 bis 11, dadurch gekennzeichnet, daß die jeweilige elektronische Schalteinrichtung (16) von einer elektronischen Steuereinrichtung (B, SS, A1, A2) gesteuert ist.

13. Maschine nach Anspruch 12, dadurch gekennzeichnet, daß die elektronische Steuereinrichtung (B, SS, A1, A2) einen Mikroprozessor aufweist.

14. Maschine nach Anspruch 12 oder 13, dadurch gekennzeichnet, daß die elektronische Steuereinrichtung (B, SS, A1, A2) die Drehzahl der Maschine steuert.

15. Verwendung der Maschine nach einem der Ansprüche 1 bis 14 als Radantriebsmotor bei Kraftfahrzeugen.

**Claims**

1. A rotary electric machine comprising a first functional member (2) and a second functional member (10), one of the two functional members (10) being rotatable with respect to the other functional member (2), and an air gap existing between the two surfaces facing each other of the two functional members (2, 10),
and comprising the following features in combination:
(a) one of the two functional members (10) comprises a multiplicity of permanent magnets (14) of alternating polarity distributed in a ring arrangement at its side facing the air gap;
(b) the permanent magnet poles (14) are provided by permanent magnets (12) having a coefficient of permeability in the order of the permeability of air ($\mu_r = 1$);
(c) the other one of the two functional members (2) comprises a multiplicity of electromagnet poles distributed in a ring arrangement at its side facing the air gap, and having switchable electromagnet pole windings (6; $E_1$; $E_2$);
(d) the number of permanent magnet poles (14) is equal to the number of electromagnet poles (8) or differs from the number of electromagnet poles (8) by a small integer;
(e) the electromagnet poles (8) are provided with individually associated electromagnet pole windings (6; $E_1$; $E_2$);
(f) for switching the electromagnet pole windings (6; $E_1$; $E_2$) in the respective proper direction of current for the duration of a suitable relative functional position with respect to permanent magnet poles (14), there is provided a plurality of electronic switching means (16) each switching a partial number of electromagnet pole windings (6; $E_1$; $E_2$) and being controlled by detection of the rotational relative position of the two functional members (2, 10) by at least one sensor (S) arranged on the functional member (2) provided with the electromagnet poles (8);
(g) one electronic switching means (16) each is provided
(g1) for switching the electromagnet pole

winding (6; $E_1$; E2) of one single electromagnet pole (8), or

(g2) for commonly switching the electromagnet pole windings (6; $E_1$; $E_2$) of a plurality, but not all, of those electromagnet poles (8) which - in the event of a difference between the number of permanent magnet poles (14) and the number of electromagnet poles (8) of the machine - are in the same relative position to permanent magnet poles (14);

(h) the electronic switching means (16) are constructed with four controllable semiconductor switching elements (T1, T2, T3, T4) disposed in bridge circuit arrangement.

2. A machine according to claim 1,
characterized in that one of the two functional members (2) is diposed inside the other functional member (10) such that an essentially cylindrical air gap is formed.

3. A machine according to claim 2,
characterized in that the permanent magnet poles (14) are provided on the outer functional member (10).

4. A machine according to claim 2 or 3,
characterized in that the inner functional member (2) is stationary and the outer, rotatable functional member (10) is cup-shaped.

5. A machine according to any one of claims 1 to 4,
characterized in that the permanent magnets (12) are provided from a material based on rare earths and cobalt.

6. A machine according to any one of claims 1 to 5,
characterized in that Hall detectors are provided as sensors (S).

7. A machine according to any one of claims 1 to 6,
characterized in that electromagnet pole structural elements are provided which are provided with a winding prior to assembly and replaceably secured to the respective functional member (2).

8. A machine according to claim 7,
characterized in that the structural elements are identical with each other.

9. A machine according to any one of claims 1 to 8,
characterized in that the electromagnets (4) are arranged in circumferential direction with their feet (26) in contiguous relation.

10. A machine according to any one of claims 1 to 9,
characterized in that the permanent magnets (12) are arranged in circumferential direction to abut directly against one another or through thin intermediate plastic layers.

11. A machine according to any one of claims 1 to 10,
characterized in that the pitch of the arrangement of the permanent magnet poles (14) and/or the length of the permanent magnet poles (14) in the circumferential direction of rotation essentially corresponds to the length of the electromagnet poles (8) in the circumferential direction of rotation.

12. A machine according to any one of claims 1 to 11,
characterized in that the respective electronic switching means (16) is controlled by an electronic control means (B, SS, A1, A2).

13. A machine according to claim 12,
characterized in that the electronic switching means (B, SS, A1, A2) comprises a microprocessor.

14. A machine acording to claim 12 or 13,
characterized in that the electronic control means (B, SS, A1, A2) controls the speed of the machine.

15. The use of the machine according to any one of claims 1 to 14 as a wheel driving motor in motor vehicles.

## Revendications

1. Machine électrique tournante comportant une première partie fonctionnelle (2) et une seconde partie fonctionnelle (10), l'une des deux parties (10), pouvant tourner par rapport à l'autre partie fonctionnelle (2), et un interstice existant entre les deux faces en regard des deux parties fonctionnelles (2, 10), présentant, en combinaison, les caractéristiques suivantes :

a) l'une des deux parties (10) comporte sur sa face située du côté de l'interstice une pluralité de pôles magnétiques permanents répartis annulairement (14) dont la polarité alterne ;
b) les pôles magnétiques permanents (14) sont formés par des aimants permanents (12) présentant une perméabilité relative de l'ordre de grandeur de la perméabilité de l'air ($\mu_r$ = 1) ;
c) l'autre partie (2), comporte, sur sa face située du côté de l'interstice, une pluralité de pôles électro-magnétique (8) à enroulements polaires électro-magnétiques (6; E1; E2) commutables répartis annulairement ;
d) le nombre de pôles magnétiques permanents (14) est égal à celui des de pôles électro-magnétique (8) ou ne s'écarte que d'un petit nombre entier des de pôles électro-magnétique (8) ;

e) les pôles électromagnétiques (8) comportent des enroulement polaires électromagnétiques (6; E1; E2) rattachés individuels ;

f) pour commuter les enroulements polaires électromagnétiques (6; E1; E2), dans le sens de passage du courant adapté pour la durée d'une position relative fonctionnellement appropriée par rapport aux pôles magnétiques permanents (14), il est prévu plusieurs dispositifs de commutation électroniques (16), qui commutent chacun une fraction du nombre d'enroulements polaires électromagnétiques (6; E1; E2) et qui sont commandés par au moins un capteur (S) disposé sur la partie fonctionnelle (8) pourvue des pôles électro-magnétiques (8) , par la détection de la position de rotation relative des deux composants (2; 10);

g) un dispositif de commutation électronique (16) est chaque fois prévu

g1) pour commuter l'enroulement polaire magnétique (6; E1; E2) d'un seul pôle électro-magnétique (8), ou

g2) pour commuter ensemble les enroulements de pôles électro-magnétiques (6; E1; E2) de plusieurs mais pas tous de ceux des pôles électro-magnétiques (8) qui se trouvent dans la même position relative par rapport aux pôles magnétiques permanents (14), dans le cas d'une différence entre le nombre de pôles magnétiques permanents (14) et le nombre de pôles électro-magnétiques (8) de la machine ;

h) les dispositifs de commutation électroniques (16) sont réalisés avec quatre éléments de commutation à semi-conducteurs commandés (T1, T2, T3, T4), montés en pont.

2. Machine selon la revendication 1, caractérisée en ce que l'une des deux parties fonctionnelles (2) est placée à l'intérieur de l'autre partie (10), de sorte qu'un interstice sensiblement cylindrique est formé.

3. Machine selon la revendication 2, caractérisé en ce que les pôles magnétiques permanents (14) sont prévus sur la partie fonctionnelle extérieure (10).

4. Machine selon la revendication 2 ou 3, caractérisée en ce que la partie fonctionnelle intérieure (2) est stationnaire, et en ce que la partie fonctionnelle extérieure tournante (10) est en forme de pot.

5. Machine selon l'une quelconque des revendications 1 à 6, caractérisée en ce que les aimants permanents (12) sont prévus en une matière à base de terres rares avec du cobalt.

6. Machine selon l'une quelconque des revendications 1 à 5, caractérisée en ce qu'il est prévu, comme capteurs (S), des sondes de Hall.

7. Machine selon l'une quelconque des revendications 1 à 6, caractérisée en ce qu'il est prévu des composants à pôles électromagnétiques bobinés avant le montage et fixés de façon amovible à la partie (2) concernée.

8. Machine selon la revendication 7, caractérisée en ce que les composants sont identiques entre-eux.

9. Machine selon l'une quelconque des revendications 1 à 8, caractérisée en ce que les électro-aimants (4) sont prévus de façon à se toucher par leurs pieds (26) en direction périphérique.

10. Machine selon l'une quelconque des revendications 1 à 9, caractérisée en ce que les aimants permanents (12) sont prévus de façon à être en direction périphérique en contact direct ou par l'intermédiaire de minces couches plastiques intercalaires.

11. Machine selon l'une quelconque des revendications 1 à 10, caractérisée en ce que le pas de la disposition des pôles magnétiques permanents (14) et/ou la longueur des pôles magnétiques permanents (14) dans la direction périphérique de rotation correspond(ent) sensiblement à la longueur des pôles électromagnétiques (8) dans la direction périphérique de rotation.

12. Machine selon l'une quelconque des revendications 1 à 11, caractérisée en ce que les différents dispositifs de commutation électronique (16) sont commandés par un dispositif de commande électronique (B, SS, A1, A2).

13. Machine selon la revendication 12, caractérisée en ce que le dispositif de commande électronique (B, SS, A1, A2) comporte un microprocesseur.

14. Machine selon la revendication 12 ou 13, caractérisée en ce que le dispositif de commande électronique (B, SS, A1, A2) commande la vitesse de rotation de la machine.

15. Utilisation de la machine selon l'une quelconque des revendications 1 à 14 comme moteur d'entraînement de roues dans des véhicules automobiles.

FIG.1

FIG.2

FIG.3